# EUROPÄISCHE PATENTSCHRIFT

(11) **EP 1 779 966 B1**
(45) Veröffentlichungstag und Bekanntmachung des Hinweises auf die Patenterteilung: **21.05.2008**
(21) Anmeldenummer: 06008726.9
(22) Anmeldetag: 27.04.2006
(51) Int. Cl.: B23Q 1/25, B23D 55/02

(54) **Bandsäge**
band saw
scie à ruban

(30) Priorität: 31.10.2005 DE 202005017147 U
(43) Veröffentlichungstag der Anmeldung: 02.05.2007
(73) Patentinhaber: Metabowerke GmbH, 72622 Nürtingen (DE)
(72) Erfinder: Vorwerk, Uwe, 49770 Herzlake (DE); Niemann, Bernhard, 49740 Haselünne (DE)
(74) Vertreter: Gesthuysen, von Rohr & Eggert

(56) Entgegenhaltungen:
- DE-U1- 29 703 395
- US-A- 4 559 858
- US-B1- 6 457 395

## Beschreibung

Die vorliegende Erfindung betrifft eine Bandsäge mit den Merkmalen des Oberbegriffs von Anspruch 1.

Die bekannte, den Ausgangspunkt der vorliegenden Erfindung bildende Bandsäge (DE-U-297 03 395, siehe auch US-B-6,457,395) weist einen Träger und einen an dem Träger gelagerten, eine Werkstückauflagefläche bildenden Bearbeitungstisch auf. Der Träger weist eine Standfläche zur Aufstellung der Bandsäge auf dem Boden auf. Die Standfläche ist möglichst klein ausgeführt, um den Bediener der Bandsäge nicht zu behindern. Die Bandsäge bzw. deren Träger ist von insgesamt schlanker, hoher Form, was dadurch ermöglicht wird, daß der Träger einen oberen Abschnitt mit einem Umlenkrad darin und einen unteren Abschnitt ebenfalls mit einem Umlenkrad darin aufweist, wobei um die beiden Umlenkräder herum das Sägeband der Bandsäge umläuft. Es handelt sich also konkret um eine Vertikal-Bandsäge. Im unteren Abschnitt des Trägers befindet sich bei einer solchen Vertikal-Bandsäge regelmäßig auch der elektrische Antriebsmotor.

Für Bandsägen gelten bestimmte Sicherheitsbestimmungen hinsichtlich der Standfestigkeit. Danach darf sich eine Bandsäge bei einer Schubkraft von 100 N nicht bewegen. Ferner darf sich die Vorschubrichtung der Bandsäge nicht umkehren, wenn eine Schubkraft von 300 N auf die Vorderkante des Bearbeitungstisches ausgeübt wird (EN 61029-2-5).

Um eine Bandsäge den Sicherheitsbestimmungen für die Standfestigkeit konform auszugestalten, ist es erforderlich, daß der Träger entsprechend ausgelegt ist. Bekannt ist es, den Träger im Bereich der Standfläche hinreichend schwer auszugestalten. Als Alternative kann die Standfläche entsprechend groß ausgestaltet werden. Es liegt auf der Hand, daß dies bei einer Bandsäge mit einem Träger mit insgesamt schlanker, hoher Form besonders relevant ist.

Bekannt ist auch eine fahrbare Horizontal-Bandsäge für das Sägen von Baumstämmen und anderen langgestreckten, schweren Gegenständen, die auf einem Anhänger-Fahrgestell transportiert werden kann. Diese Horizontal-Bandsäge hat einen Träger mit einem um zwei horizontal nebeneinander angeordnete Umlenkräder umlaufenden Sägeband. Dieser Träger hat keine Standfläche zur Aufstellung der Bandsäge auf dem Boden, sondern befindet sich freischwebend an einem Ausleger des Anhänger-Fahrgestells. Das Anhänger-Fahrgestell selbst wiederum hat seitlich ausklappbare Stützen, um seine Standfestigkeit zu erhöhen.

Der vorliegenden Erfindung liegt das Problem zugrunde, die bekannte, eingangs erläuterte Vertikal-Bandsä.ge so auszugestalten und weiterzubilden, daß sie die Sicherheitsbestimmungen hinsichtlich der Standfestigkeit erfüllt und gleichzeitig einen hohen Bedienkomfort aufweist.

Die Erfindung löst das zuvor erläuterte Problem bei einer Bandsäge mit den Merkmalen des Oberbegriffs von Anspruch 1 durch die Merkmale des kennzeichnenden Teils von Anspruch 1. Bevorzugte Ausgestaltungen und Weiterbildungen sind Gegenstand der Unteransprüche.

Die Lösung des Problems wird nach der Erfindung dadurch erreicht, daß der Träger zumindest ein zusätzliches Standelement aufweist, das in eine Transportstellung und in eine Sicherungsstellung bringbar ist. Das Standelement ist dabei so angeordnet und/oder ausgebildet, daß es in seiner Transportstellung die senkrechte Projektionsfläche der Bandsäge, also die Fläche, die die Bandsäge bei Draufsicht ausfüllt, im wesentlichen nicht vergrößert. In seiner Sicherungsstellung hingegen sichert das zusätzliche Standelement die Bandsäge gegen Umkippen, insbesondere durch eine Vergrößerung der Standfläche. Je nach Ausgestaltung des Standelements ist dabei allerdings nicht ausgeschlossen, daß die Bandsäge sich in engen Grenzen, also um nicht mehr als einige Grad neigt, ohne aber zu kippen. Durch das zusätzliche Standelement ist es möglich, die Standfläche des Trägers an sich relativ klein und leicht auszuführen, ohne dabei jedoch die Standfestigkeit der Bandsäge im Betrieb negativ zu beeinflussen.

In bevorzugter Ausgestaltung ist das Standelement in der Sicherungsstellung fixierbar. Ein unbeabsichtigtes Verstellen des Standelements aus der Sicherungsstellung in die Transportstellung wird dadurch wirksam verhindert.

Weiter vorteilhaft ist es, wenn bei einer rechteckigen Standfläche mit zwei Längsseiten und zwei gegenüber diesen kürzeren Querseiten ein Standelement an jeder der Längsseiten angeordnet ist, um eine hohe Standfestigkeit zu realisieren.

Alternativ dazu ist es ausreichend, daß das Standelement an der Längsseite angeordnet ist, zu der die Kippwahrscheinlichkeit der Bandsäge am größten ist. Die Kippwahrscheinlichkeit selbst wird beeinflußt durch die Lage des Schwerpunkts der Bandsäge sowie durch die Bedienung.

Weiter vorteilhaft ist, wenn die originäre Standfläche des Trägers, also die Standfläche bei in Transportstellung befindlichem Standelement, sich an zumindest drei Seiten nicht über die Projektionsfläche des Bearbeitungstisches hinaus erstreckt. An der vierten Seite des Bearbeitungstisches kann eine solche Erstrekkung vorgesehen sein, da an dieser Seite oftmals auch weitere Elemente der Bandsäge angeordnet sind, wie z. B. der Motor oder weitere Teile des Trägers. Insgesamt wird dennoch ein kompakter Aufbau der Bandsäge erzielt.

Bei einer Bandsäge mit einem Träger von insgesamt schlanker, hoher Form, also einer Vertikal-Bandsäge der in Rede stehenden Art, weist die Standfläche des Trägers in aller Regel zwei Längsseiten und zwei gegenüber den Längsseiten kürzere Querseiten auf. Dabei ist es aus Gründen der bequemen Bedienbarkeit der Bandsäge besonders vorteilhaft, wenn die Querseiten der Standfläche eine Länge aufweisen, die maximal 30 %, vorzugsweise maximal 15 %, insbesondere maximal 10 %, der Höhe der Bandsäge entspricht. Unter diesen Umständen kommt dem zusätzlichen, in der Sicherungsstellung die Standfläche des Trägers vergrößernden Standelements erhebliche Bedeutung für die Lösung des oben angegebenen Problems zu.

In weiter bevorzugter Ausgestaltung ist das Standelement verliersicher an dem Träger angeordnet. Das Standelement ist demzufolge in einer Art und Weise vorgesehen, daß es sowohl in seiner Transportstellung als auch in seiner Sicherungsstellung mit dem Träger verbunden ist. Nicht zwingend gegeben ist diese verliersichere Verbindung allerdings bei der Verstellung von der Transportstellung in die Sicherungsstellung.

Weitere Einzelheiten, Merkmale, Ziele und Vorteile der vorliegenden Erfindung werden nachfolgend anhand einer Zeichnung bevorzugter Ausführungsbeispiele näher erläutert. In der Zeichnung zeigt
- Fig. 1: eine Seitenansicht einer erfindungsgemäßen Bandsäge mit in der Sicherungsstellung befindlichem Standelement,
- Fig. 2: die Bandsäge aus Fig. 1 von unten,
- Fig. 3: eine Seitenansicht einer alternativen Ausgestaltung,
- Fig. 4: eine Seitenansicht einer weiteren alternativen Ausgestaltung,
- Fig. 5: eine Ansicht wie Fig. 2 einer dritten alternativen Ausgestaltung.

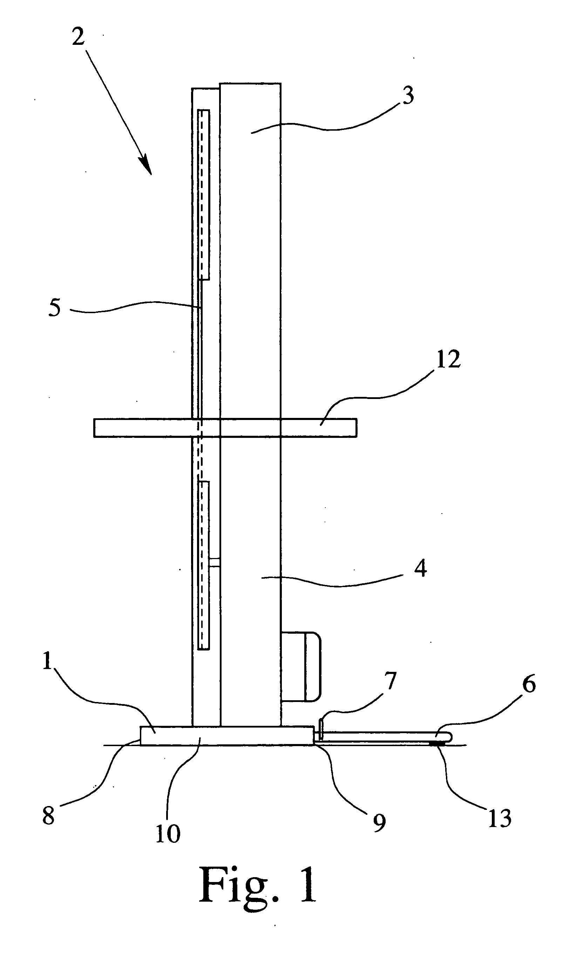

Fig. 1 zeigt eine Bandsäge mit einem eine Standfläche 1 zur Aufstellung auf dem Boden aufweisenden Träger 2. Der Träger 2 hat eine schlanke, hohe Form und weist einen oberen Abschnitt 3 mit einem Umlenkrad darin und einen unteren Abschnitt 4 ebenfalls mit einem Umlenkrad darin auf. Um die beiden Umlenkräder herum läuft ein Sägeband 5.

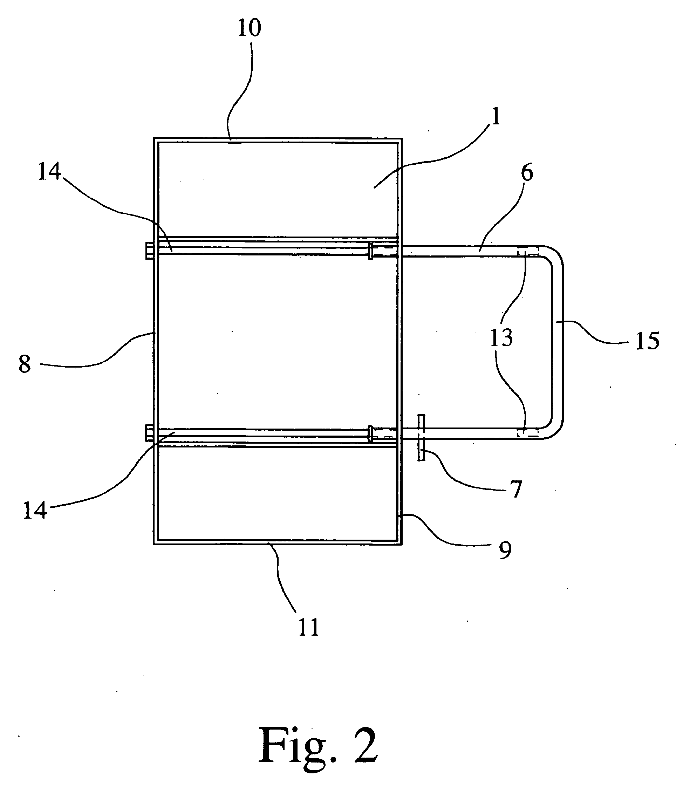

Der Träger 1 weist ein zusätzliches Standelement 6 auf, um im Betrieb der Bandsäge ihre ausreichende Standfestigkeit zu gewährleisten. Das Standelement 6 ist in eine Transportstellung und in eine Sicherungsstellung bringbar. Es ist so angeordnet und ausgebildet, daß es in seiner Transportstellung die senkrechte Projektionsfläche der Bandsäge im wesentlichen nicht vergrößert. Das bedeutet, daß in der Draufsicht auf die Bandsäge das Standelement 6 in seiner Transportstellung nur geringfügig über die Projektionsfläche der Bandsäge im übrigen hinausragt. In seiner Sicherungsstellung sichert das Standelement 6 die Bandsäge gegen Umkippen. Aus Fig. 1, 2 wird deutlich, daß das Standelement 6 in seiner Sicherungsstellung die Standfläche des Trägers 2 vergrößert. Diese Vergrößerung der Standfläche 1 führt dazu, daß die Bandsäge einer höheren Schubkraft standhalten kann, ohne dabei umzukippen.

Das Standelement 6 ist hier und vorzugsweise so ausgeführt, daß es die Bandsäge bereits gegen jegliches Neigen sichert. Denkbar ist aber auch eine Sicherung nur gegen Umkippen, die ein Neigen der Bandsäge in engen Grenzen, d. h. um wenige Grad, zuläßt. Ferner ist es möglich, entgegen der hier gezeigten Ausführungsform mehrere Standelemente 6 vorzusehen, nämlich mehrere Standelemente 6 auf der gleichen Seite der Bandsäge und/oder an verschiedenen Seiten der Bandsäge.

Damit das Standelement 6 nicht versehentlich in die Transportstellung gebracht werden kann, ist es in der Sicherungsstellung fixierbar. Dies geschieht vorliegend mittels einer Klemmfeder 7, die in der Sicherungsstellung an dem Standelement 6 angebracht wird. Die Klemmfeder 7 wird hierzu mit einem Schenkel durch ein in dem Standelement 6 vorgesehenes Loch geschoben. Der andere Schenkel der Klemmfeder 7 verläuft über das Standelement 6. Er sichert die Klemmfeder 7 durch Klemmung gegen ein Herausrutschen aus dem Loch des Standelements 6.

Die Standfläche 1 des Trägers 2 einer Bandsäge weist oftmals zwei Längsseiten 8, 9 und zwei gegenüber den Längsseiten kürzere Querseiten 10, 11 auf.

Vorliegend ist nun eine Bandsäge (Fig. 1, 2) mit nur einem Standelement 6 gezeigt. Dieses ist an einer Längsseite 9 angeordnet. Die Anordnung erfolgt deshalb an der Längsseite 9, da zu dieser Längsseite 9 hin die Kippwahrscheinlichkeit aufgrund der Lage des Schwerpunktes der Bandsäge am größten ist. Alternativ ist es möglich, ein Standelement 6 an jeder der Längsseiten 8, 9 anzuordnen. Ebenfalls kann bei einer insbesondere quadratischen Standfläche 1 auch an mehr als zwei Seiten ein Standelement 6 angeordnet sein.

Die Bandsäge weist einen eine Werkstückauflagefläche bildenden Bearbeitungstisch 12 auf. Die originäre Standfläche 1 des Trägers 2, also die Standfläche 1 bei in Transportstellung befindlichem Standelement 6, ist dabei so ausgebildet, daß sie zumindest an drei Seiten nicht über die Projektionsfläche des Bearbeitungstisches 12 hinausragt. Dies vermindert die Stolpergefahr für einen Bediener, da er bereits durch die Ausmaße des Bearbeitungstisches 12 von einem näheren Herantreten an die Standfläche abgehalten wird.

Eine Vertikal-Bandsäge stellt eine besonders hohe Werkzeugmaschine dar, bei der die Längs- und Querausdehnung der Standfläche 1 im Verhältnis zur Höhe üblicherweise gering ist. Um dennoch eine hohe Standfestigkeit zu realisieren, ist es bisher notwendig gewesen, die Standfläche 1 zu vergrößern oder besonders schwer auszugestalten. Durch die Erfindung ist es nunmehr möglich, daß die Querseiten der Standfläche 1 eine Länge aufweisen, die maximal 30 % und vorzugsweise maximal 15 %, ggf. sogar nur etwa 10 % der Höhe der Bandsäge entspricht und dennoch die gültigen Sicherheitsbestimmungen (EN 61029-2-5) eingehalten werden.

Um die Bandsäge nicht nur gegen Umkippen, sondern auch bereits gegen Neigen zu sichern, kann vorgesehen sein (nicht gezeigt), daß das Standelement 6 in der Sicherungsstellung gegenüber dem Träger 2 eine Neigung aufweist. Durch die Neigung wird gewährleistet, daß das Standelement 6 in der Sicherungsstellung jedenfalls im Bereich des vom Träger abgewandten Endes mit dem Boden in Eingriff kommt. Eine solche Neigung beträgt vorzugsweise zwischen etwa 1° und etwa 10°. Die tatsächlich realisierte Neigung ist abhängig von der Länge des Standelements 6 und der Höhe, in der das Standelement 6 an dem Träger 2 angeordnet ist.

Hier und vorzugsweise ist unabhängig von der Neigung des Standelements 6 vorgesehen, daß das Standelement 6 in der Sicherungsstellung auf dem Boden aufliegt. Im hier gezeigten Ausführungsbeispiel weist das Standelement 6 Noppen 13 auf, mit denen es auf dem Boden aufliegt. Diese Noppen 13 bestehen vorzugsweise aus elastischem Material. Das elastische Material ermöglicht nämlich auch eine Anpassung an geringe Unebenheiten des Bodens sowie ein Ausliegen des Standelements 6 auf dem Boden, wenn sich das Standelement 6 nicht genau parallel zu der Standfläche 1 erstreckt. Durch Verwendung des elastischen Materials für die Noppen 13 sind somit übliche Toleranzen für die Anordnung des Standelements 6 akzeptabel.

Bereits zuvor wurde beschrieben, daß das Standelement 6 in der Sicherungsstellung fixierbar ist. Ferner ist es auch möglich, das Standelement 6 in der Transportstellung zu fixieren. Dies ist besonders zweckmäßig um sicherzustellen, daß das Standelement 6 beim Transport der Bandsäge in der Transportstellung bleibt. Realisiert ist eine solche Fixierung beispielsweise ebenfalls durch die Klemmfeder 7, durch eine Rastung, einen Sicherungshaken o. dgl..

Hier und vorzugsweise ist das Standelement 6 verliersicher an dem Träger 2 angeordnet. "Verliersicher" bedeutet dabei, daß das Standelement 6 sowohl in der Transportstellung als auch in der Sicherungsstellung so mit dem Träger 2 verbunden ist, daß ein versehentliches Lösen und damit ein mögliches Verlieren vermieden wird. Die verliersichere Ausgestaltung schließt aber nicht aus, daß das Standelement 6 bei der Verstellung von der Transportstellung in die Sicherungsstellung und umgekehrt verlierbar ist, das Standelement 6 also in dieser Phase nicht mit dem Träger 2 verbunden ist.

In den Fig. 1, 2 ist ein Ausführungsbeispiel gezeigt, bei dem das Standelement 6 aus der Transportstellung in die Sicherungsstellung und umgekehrt verschiebbar ist. Hierzu ist das Standelement 6 als eine Kombination aus zwei Stangen 14 und einem Rohr 15 ausgeführt. Denkbar sind unabhängig von der hier gezeigten Ausführung auch Ausführungen mit einer Stange 14 und einem Rohr 15, mit einer Stange 14 und zwei Rohren 15 sowie mit mehreren Stangen 14 und mehreren Rohren 15. Für diese Ausgestaltungen gilt die folgende Beschreibung entsprechend.

Die Kombination aus Stangen 14 und Rohr 15 ist hier und vorzugsweise so ausgeführt, daß das Rohr 15 in der Transportstellung die Stangen 14 zumindest über einen erheblichen Teil ihrer Länge bzw. der Länge des Rohrs 15 umgibt. In der Sicherungsstellung hingegen umgibt das Rohr 15 die Stangen 14 nur zu einem geringen Teil ihrer Länge. Vorteilhaft an einer solchen, sich auch in der Sicherungsstellung zu einem geringen Teil überlappenden Anordnung von Stangen 14 und Rohr 15 ist eine flächige Kraftaufnahme im Bereich der Überlappung. Ohne eine solche Überlappung würde nämlich die gesamte an dem Rohr 15 angreifende Kraft von der in einem solchen Fall relativ kleinen Lagerstelle des Rohrs 15 aufgenommen werden.

Je nach Ausgestaltung der Kombination aus Stange 14 und Rohr 15 ist es möglich, daß entweder die Stange 14 aus dem Rohr 15 ausziehbar ist und so zur Vergrößerung der Standfläche 1 beiträgt, oder aber, wie hier gezeigt, das Rohr 15 von den Stangen 14 herunterziehbar ist. In letzterem Fall trägt das Rohr 15 zur Vergrößerung der Standfläche 1 bei.

Fig. 2 zeigt, daß vorliegend die Stangen 14 am Träger 2 befestigt sind. Hierzu sind die Stangen 14 einenends an dem Träger 2 angeschraubt. Das Rohr 15 ist in der Sicherungsstellung von den Stangen 14 im wesentlichen heruntergezogen. Ersichtlich ist dabei aber, daß die Stangen 14 auch in der Sicherungsstellung ein Stück weit in das Rohr 15 hineinragen, vorzugsweise zwischen etwa 2 cm und etwa 20 cm. Dieses Hineinragen in das Rohr 15 dient der gleichmäßigeren Aufnahme der auf das Standelement 6 wirkenden Kräfte. Ohne ein Hineinragen der Stangen 14 in das Rohr 15 in der Sicherungsstellung müßte die Lagerstelle des Trägers 2 für das Rohr 15 die auftretenden Kräfte vollständig aufnehmen. Da nun aber die Stangen 14 ein Stück weit in das Rohr 15 hineinragen, nehmen sie ebenfalls einen Teil der auftretenden Kraft auf, so daß sich insgesamt eine gleichmäßigere Kraftverteilung ergibt. Hinsichtlich der Kraftverteilung wäre es demzufolge optimal, wenn die Stangen 14 in der Sicherungsstellung möglichst weit in das Rohr 15 hineinragen. Dies ist jedoch für eine mögliche kompakte Anordnung der Bandsäge nicht wünschenswert. Ein Optimum hinsichtlich Kraftübertragung und gleichzeitiger Kompaktheit der Anordnung ergibt sich demzufolge bei einer Überschneidung von Stange und Rohr im Bereich von etwa 2 cm bis etwa 20 cm.

Zur verliersicheren Ausgestaltung der Kombination aus Stange 14 und Rohr 15 und zur Fixierung in der Sicherungsstellung bezüglich der Ausziehrichtung ist das Rohr 15 in dieser Ausgestaltung gegen vollständiges Ausziehen gesichert. Bei einer Ausgestaltung, bei der die Stange 14 ausziehbar ist, sollte dementsprechend diese gegen vollständiges Ausziehen gesichert sein. Vorliegend wird diese Sicherung dadurch erzielt, daß das Rohr 15 an seinem trägerseitigen Ende eine Bördelung aufweist. Diese Bördelung ist so ausgestaltet, daß der gebördelte Rand des Rohrs 15 nicht durch die in dem Träger 2 für das Rohr 15 vorgesehenen Löcher hindurch paßt. Alternativen zu der Bördelung sind beispielsweise ein Vorsprung oder ein Bolzen an dem trägerseitigen Ende des Rohrs 15.

Aus Fig. 2 ist ersichtlich, daß das Rohr 15 U-förmig ausgeführt und auf den zwei Stangen 14 verschiebbar gelagert ist. Diese Ausgestaltung ist besonders zweckmäßig, da nur ein Handgriff zum Ausziehen des Rohrs 15 notwendig ist, dennoch eine Standfestigkeit wie durch zwei parallele Rohre 15 erzielt wird.

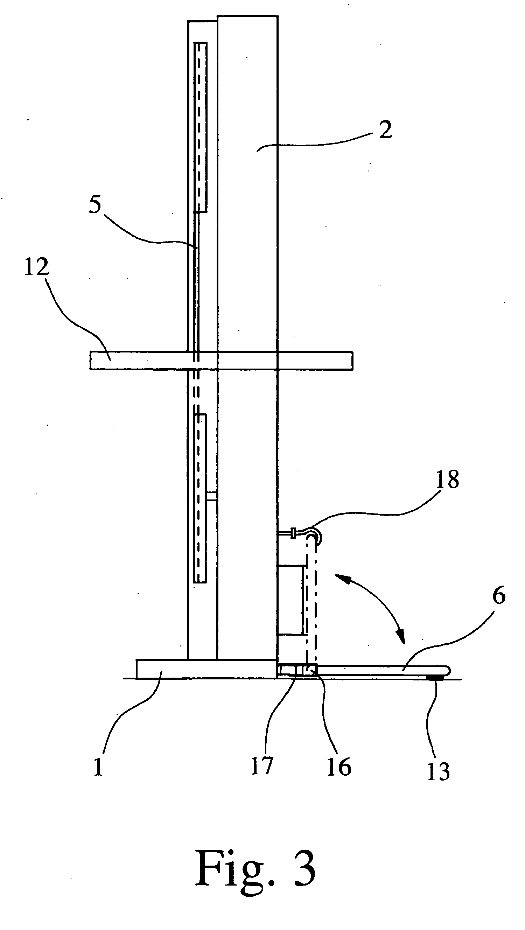

Die Fig. 3 bis 5 zeigen weitere Ausgestaltungen der vorliegenden Erfindung, bei denen das Standelement 6 aus der Transportstellung in die Sicherungsstellung und umgekehrt schwenkbar ist.

Bei der Ausgestaltung gemäß Fig. 3 verläuft die Schwenkachse 16 des Standelements 6 im wesentlichen parallel zu der Standfläche 1 des Trägers 2. Auch hier ist es besonders vorteilhaft, wenn das Standelement 6 U-förmig ausgeführt ist. Die U-förmige Ausführung des Standelements 6 ermöglicht einerseits eine hohe Standfestigkeit und andererseits eine besonders einfache Anordnung an dem Träger 2. Durch die U-förmige Ausgestaltung des Standelements 6 ist es nämlich möglich, dieses mit seinen beiden Schenkeln jeweils seitlich von ggf. vorhandenen Anbauten, wie z. B. einem Motor, anzuordnen und zum Schwenken in die Tragstellung über diese Anbauten hinüber zu schwenken.

Die Fixierung des Standelements 6 erfolgt bei dieser Ausgestaltung mittels einer federvorgespannten Hülse 17. Die Hülse 17 ragt in der Sicherungsstellung über das Schwenkgelenk und verhindert somit ein Schwenken des Standelements 6. Alternativ dazu kann die Fixierung beispielsweise mittels einer Rastung, eines Bolzens oder eines Hakens erfolgen.

In der Transportstellung wird das Standelement 6 vorliegend durch einen Haken 18 gehalten.

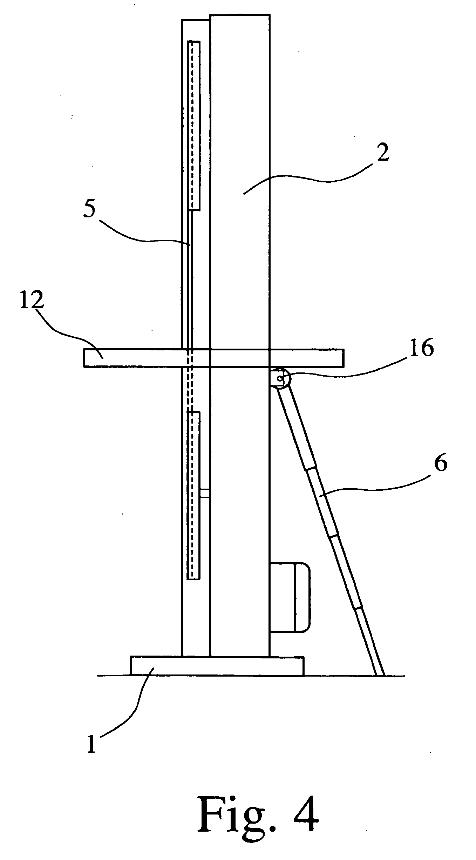

Fig. 4 zeigt ebenfalls eine Ausgestaltung, bei der die Schwenkachse 16 im wesentlichen parallel zu der Standfläche 1 des Trägers verläuft. Im Gegensatz zu dem zuvor gezeigten Ausführungsbeispiel ist die Schwenkachse 16 aber nicht im Bereich der Standfläche 1 angeordnet, sondern befindet sich deutlich höher an dem Träger 2. Das Standelement 6 ist nämlich als ausklappbares Standbein ausgeführt.

Insbesondere bei der Ausgestaltung des Standelements 6 als Standbein ist besonders bevorzugt, wenn dies teleskopartig ausziehbar ist. Die teleskopartige Ausgestaltung ermöglicht eine besonders einfache Anpassung der Länge des Standelements 6. Bei dieser Variante können somit auch Bodenunebenheiten oder sogar Stufen ausgeglichen werden. Voraussetzung für die Nutzung einer teleskopartigen Ausgestaltung ist allerdings, daß die einzelnen Teleskopstücke jeweils in ihrer ausgezogenen Stellung fixierbar sind. Eine solche Fixierung kann beispielsweise durch ein Festschrauben erzielt werden.

Eine teleskopartige Ausgestaltung des Standelements 6 kann darüber hinaus aber auch bei den weiteren beschriebenen Ausgestaltungen Anwendung finden.

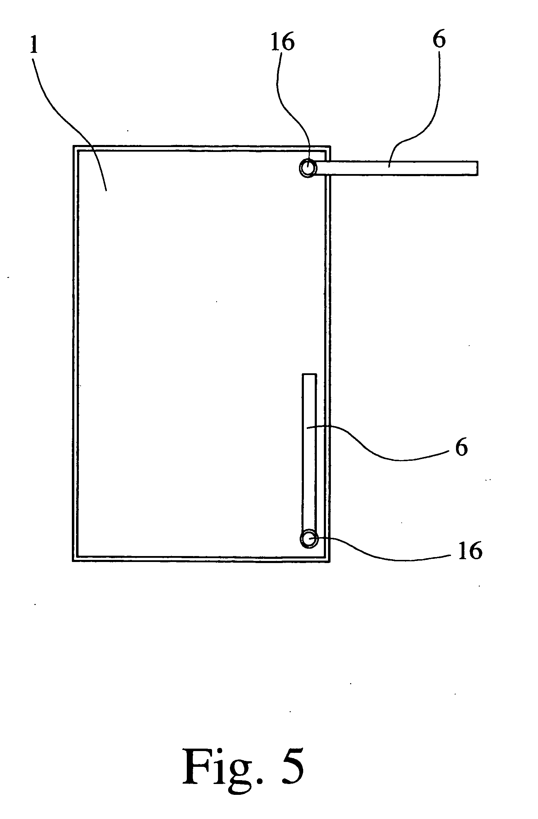

Eine weitere alternative Anordnung des Standelements 6 zeigt Fig. 5. Bei dieser Ausgestaltung verläuft die Schwenkachse 16 des Standelements 6 nicht parallel zur Standfläche 1, sondern im wesentlichen senkrecht zu dieser.

Ferner ist bei der hier gezeigten Ausgestaltung zu sehen, daß zwei gleich ausgeführte Standelemente 6 vorgesehen sind. Diese können je nach Bedarf einzeln oder gemeinsam verwendet werden. Zu sehen ist hier ein Standelement 6 in der Transportstellung und das andere Standelement 6 in der Sicherungsstellung.

Die Schwenkachsen 16 beider Standelemente sind so angeordnet, daß sich das Standelement 6 auch in der Sicherungsstellung mit einem Teil in den Träger 2 erstreckt. Der über diesem Teil des Standelements 6 angeordnete Träger 2 bildet dabei eine Abstützung für das Standelement 6, er kommt nämlich spätestens bei Belastung des Standelements 6 mit diesem Teil des Standelements 6 in Eingriff. Durch diese Anordnung des Standelements 6 wird somit gleichermaßen, wie bei dem zuvor beschriebenen ausziehbaren Standelement 6, eine gleichmäßige Kraftverteilung über eine größere Fläche erzielt.

## Patentansprüche

1. Bandsäge mit einem eine Standfläche (1) zur Aufstellung der Bandsäge auf dem Boden aufweisenden Träger (2) von insgesamt schlanker, hoher Form,
wobei der Träger (2) einen oberen Abschnitt (3) mit einem Umlenkrad darin und einen unteren Abschnitt (4) ebenfalls mit einem Umlenkrad darin aufweist und um die beiden Umlenkräder herum ein Sägeband (5) umläuft, und
wobei an dem Träger (2) ein eine Werkstückauflagefläche bildender Bearbeitungstisch (12) gelagert ist,
**dadurch gekennzeichnet,**
**daß** der Träger (2) mindestens ein zusätzliches Standelement (6) aufweist, das in eine Transportstellung und in eine Sicherungsstellung bringbar ist, und
**daß** das Standelement (6) so angeordnet und/oder ausgebildet ist, daß es in seiner Transportstellung die senkrechte Projektionsfläche der Bandsäge im wesentlichen nicht vergrößert und in seiner Sicherungsstellung die Bandsäge gegen Umkippen sichert.

2. Bandsäge nach Anspruch 1, **dadurch gekennzeichnet,**
**daß** das Standelement (6) in der Sicherungsstellung die Standfläche (1) des Trägers (2) vergrößert und/oder
**daß** das Standelement (6) in der Sicherungsstellung fixierbar ist.

3. Bandsäge nach einem der vorherigen Ansprüche, **dadurch gekennzeichnet,**
**daß** die Standfläche (1) des Trägers (2) zwei Längsseiten (8, 9) und zwei gegenüber den Längsseiten (8, 9) kürzere Querseiten (10, 11) aufweist und
wobei das Standelement (6) an der Längsseite (8) angeordnet ist, zu der die Kippwahrscheinlichkeit größer ist, oder
an jeder Längsseite (8, 9) ein Standelement (6) angeordnet ist.

4. Bandsäge nach einem der vorherigen Ansprüche, **dadurch gekennzeichnet,**
**daß** die (originäre) Standfläche (1) des Trägers (2) über die Projektionsfläche des Bearbeitungstisches (12) zumindest an drei Seiten nicht hinausragt.

5. Bandsäge nach einem der vorherigen Ansprüche, **dadurch gekennzeichnet,**
**daß** die Querseiten (10, 11) der Standfläche (1) eine Länge aufweisen, die maximal 30 %, vorzugsweise maximal 15 %, insbesondere maximal 10 % der Höhe der Bandsäge entspricht.

6. Bandsäge nach einem der vorherigen Ansprüche, **dadurch gekennzeichnet,**
**daß** das Standelement (6) in der Sicherungsstellung gegenüber dem Träger (2) eine Neigung, vorzugsweise zwischen etwa 1° und etwa 10°, aufweist, und/oder
**daß** das Standelement (6) in der Sicherungsstellung auf dem Boden aufliegt, vorzugsweise mit Noppen (13), vorzugsweise aus elastischem Material, und/oder
**daß** das Standelement (6) in der Transportstellung fixierbar ist, und/oder
**daß** das Standelement (6) verliersicher an dem Träger (2) angeordnet ist.

7. Bandsäge nach einem der vorherigen Ansprüche, **dadurch gekennzeichnet,**
**daß** das Standelement (6) aus der Transportstellung in die Sicherungsstellung und umgekehrt verschiebbar ist,
wobei, vorzugsweise, das Standelement (6) als eine Kombination aus Stange (14) und Rohr (15) ausgeführt ist, das Rohr (15) in der Transportstellung die Stange (14) zumindest über einen erheblichen Teil ihrer/seiner Länge umgibt und das Rohr (15) in der Sicherungsstellung die Stange (14) nur zu einem geringen Teil ihrer/seiner Länge umgibt,
wobei, weiters vorzugsweise, die Stange (14) am Träger (2) befestigt und das Rohr (15) in der Sicherungsstellung im wesentlichen von der Stange (14) heruntergezogen ist, insbesondere jedoch die Stange (14) auch in der Sicherungsstellung ein Stück weit in das Rohr (15) hineinragt, vorzugsweise zwischen etwa 2 cm und etwa 20 cm.

8. Bandsäge nach Anspruch 7, **dadurch gekennzeichnet,**
**daß** die Stange (14) bzw. das Rohr (15) gegen vollständiges Ausziehen gesichert ist,
wobei, vorzugsweise, das Rohr (15) an seinem trägerseitigen Ende eine Bördelung, einen Vorsprung oder einen Bolzen aufweist.

9. Bandsäge nach Anspruch 7 oder 8, **dadurch gekennzeichnet,**
**daß** das Rohr (15) U-förmig ausgeführt und auf zwei Stangen (14) verschiebbar gelagert ist.

10. Bandsäge nach einem der Ansprüche 1 bis 6, **dadurch gekennzeichnet,**
**daß** das Standelement (6) aus der Transportstellung in die Sicherungsstellung und umgekehrt schwenkbar ist,
wobei, vorzugsweise, die Schwenkachse (16) des Standelements (6) im wesentlichen parallel zur Standfläche (1) verläuft,
wobei, weiters vorzugsweise, das Standelement (6) U-förmig ausgeführt ist.

11. Bandsäge nach Anspruch 10, **dadurch gekennzeichnet,**
**daß** die Schwenkachse (16) des Standelements (6) im wesentlichen rechtwinklig zur Standfläche (1) verläuft,
wobei, vorzugsweise, das Standelement (6) sich in der Sicherungsstellung mit einem Teil so in den Träger (2) erstreckt, daß der über diesem Teil angeordnete Träger (2) eine Abstützung für das Standelement (6) bildet.

12. Bandsäge nach Anspruch 10 oder 11, **dadurch gekennzeichnet,**
**daß** die Fixierung des Standelements (6) in der Sicherungsstellung als Hülse (17) über dem Schwenkgelenk oder als Rastung ausgeführt ist, und/oder
**daß** das Standelement (6) teleskopartig ausziehbar ist und daß die einzelnen Teleskopstücke jeweils in ihrer ausgezogenen Stellung fixierbar sind.

## Claims

1. Band saw comprising a support (2) which has a base (1) for setting up the band saw on the floor and which has a slim, tall form overall, wherein the support (2) has a top section (3) with a deflection wheel therein and a bottom section (4) likewise with a deflection wheel therein, and a saw band (5) revolves around the two deflection wheels, and wherein a machining table (12) forming a work rest surface is mounted on the support (2), **characterized in that** the support (2) has at least one additional stand element (6) which can be brought into a transport position and a securing position, and **in that** the stand element (6) is arranged and/or designed in such a way that it essentially does not enlarge the perpendicular projected area of the band saw in its transport position and secures the band saw against tipping-over in its securing position.

2. Band saw according to Claim 1, **characterized in that** the stand element (6) enlarges the base (1) of the support (2) in the securing position, and/or **in that** the stand element (6) can be fixed in the securing position.

3. Band saw according to either of the preceding claims, **characterized in that** the base (1) of the support (2) has two longitudinal sides (8, 9) and two shorter transverse sides (10, 11) compared with the longitudinal sides (8, 9), and wherein the stand element (6) is arranged on that longitudinal side (8) on which the likelihood of tipping is greater, or a stand element (6) is arranged on each longitudinal side (8, 9).

4. Band saw according to one of the preceding claims, **characterized in that** the (original) base (1) of the support (2) does not project beyond the projected area of the machining table (12) on at least three sides.

5. Band saw according to one of the preceding claims, **characterized in that** the transverse sides (10, 11) of the base (1) have a length which corresponds at most to 30%, preferably at most to 15%, in particular at most to 10% of the height of the band saw.

6. Band saw according to one of the preceding claims, **characterized in that** the stand element (6) has an inclination, preferably of between about 1° and about 10°, relative to the support (2) in the securing position, and/or **in that** the stand element (6) rests on the floor in the securing position, preferably by means of studs (13), preferably made of an elastic material, and/or **in that** the stand element (6) can be fixed in the transport position, and/or **in that** the stand element (6) is arranged on the support (2) in a captive manner.

7. Band saw according to one of the preceding claims, **characterized in that** the stand element (6) can be displaced from the transport position into the securing position and vice versa, wherein, preferably, the stand element (6) is designed as a combination of rod (14) and tube (15), the tube (15), in the transport position, surrounds the rod (14) at least over a considerable part of its length or of the length of the tube (15), and the tube (15), in the securing position, surrounds the rod (14) only over a small part of its length or of the length of the tube (15), wherein, also preferably, the rod (14) is fastened to the support (2), and the tube (15), in the securing position, is essentially pulled down from the rod (14), but in particular the rod (14) also projects by a short distance into the tube (15) in the securing position, preferably by between about 2 cm and about 20 cm.

8. Band saw according to Claim 7, **characterized in that** the rod (14) or the tube (15) is secured against being pulled out completely, wherein, preferably, the tube (15) has a beading, a projection or a bolt at its support-side end.

9. Band saw according to Claim 7 or 8, **characterized in that** the tube (15) is of U-shaped design and is mounted on two rods (14) in a displaceable manner.

10. Band saw according to one of Claims 1 to 6,
**characterized in that** the stand element (6) can be pivoted out of the transport position into the securing position and vice versa, wherein, preferably, the pivot axis (16) of the stand element (6) runs essentially parallel to the base (1), wherein, also preferably, the stand element (6) is of U-shaped design.

11. Band saw according to Claim 10, **characterized in that** the pivot axis (16) of the stand element (6) runs essentially at right angles to the base (1), wherein, preferably, the stand element (6), in the securing position, extends with one part into the support (2) in such a way that the support (2) arranged above this part forms a brace for the stand element (6).

12. Band saw according to Claim 10 or 11, **characterized in that** the fixing of the stand element (6) in the securing position is designed as a sleeve (17) over the pivot joint or as a latching means, and/or **in that** the stand element (6) is telescopically extendable, and **in that** the individual telescopic sections can each be fixed in their extended position.

## Revendications

1. Scie à ruban comprenant un support (2) présentant une surface de base (1) pour poser la scie à ruban sur le sol, de forme globalement haute et étroite, le support (2) présentant une portion supérieure (3) avec une roue de déflexion et une portion inférieure (4) également avec une roue de déflexion, et un ruban de scie (5) passant autour des deux roues de déflexion et une table d'usinage (12) formant une surface d'appui pour des pièces étant montée sur le support (2),
**caractérisée en ce que**
le support (2) présente au moins un élément de base supplémentaire (6) qui peut être amené dans une position de transport et dans une position de fixation, et **en ce que** l'élément de base (6) est disposé et/ou réalisé de telle sorte qu'il n'augmente pas sensiblement la surface en projection verticale de la scie à ruban dans sa position de transport et qu'il fixe la scie à ruban pour empêcher tout basculement dans sa position de fixation.

2. Scie à ruban selon la revendication 1,
**caractérisée en ce que** l'élément de base (6) dans la position de fixation augmente la surface de base (1) du support (2) et/ou
**en ce que** l'élément de base (6) peut être fixé dans la position de fixation.

3. Scie à ruban selon l'une quelconque des revendications précédentes, **caractérisée en ce que** la surface de base (1) du support (2) présente deux côtés longitudinaux (8, 9) et deux côtés transversaux (10, 11) plus courts par rapport aux côtés longitudinaux (8, 9) et dans laquelle l'élément de base (6) est disposé sur le côté longitudinal (8) vers lequel la probabilité de basculement est la plus grande, ou
un élément de base (6) est disposé sur chaque côté longitudinal (8, 9).

4. Scie à ruban selon l'une quelconque des revendications précédentes, **caractérisée en ce que** la surface de base (1) (d'origine) du support (2) ne dépasse pas au-delà de la surface en projection de la table d'usinage (12), au moins au niveau de trois côtés.

5. Scie à ruban selon l'une quelconque des revendications précédentes, **caractérisée en ce que** les côtés transversaux (10, 11) de la surface de base (1) présentent une longueur qui correspondent au maximum à 30 %, de préférence au maximum à 15 %, notamment au maximum à 10 % de la hauteur de la scie à ruban.

6. Scie à ruban selon l'une quelconque des revendications précédentes, **caractérisée en ce que** l'élément de base (6) présente, dans la position de fixation, une inclinaison par rapport au support (2) de préférence comprise entre environ 1° et environ 10°, et/ou **en ce que** l'élément de base (6) repose sur le sol dans la position de fixation, de préférence avec des protubérances (13), de préférence en matériau élastique, et/ou en ce que l'élément de base (6) peut être fixé dans la position de transport et/ou **en ce que** l'élément de base (6) est disposé de manière imperdable sur le support (2).

7. Scie à ruban selon l'une quelconque des revendications précédentes, **caractérisée en ce que** l'élément de base (6) peut être déplacé de la position de transport dans la position de fixation et inversement, l'élément de base (6) étant de préférence réalisé sous forme d'une combinaison de tige (14) et de tube (15), le tube (15) entourant la tige (14) dans la position de transport au moins sur une partie considérable de sa longueur et le tube (15) entourant dans la position de fixation la tige (14) seulement sur une petite partie de sa longueur, et plus préférablement la tige (14) étant fixée sur la support (2) et le tube (15) étant essentiellement tiré sous la tige (14) dans la position de fixation, mais vers le bas depuis en particulier la tige (14) pénétrant aussi un peu plus loin dans le tube (15) dans la position de fixation, de préférence sur une distance comprise entre environ 2 et environ 20 cm.

8. Scie à ruban selon la revendication 7, **caractérisée en ce que** la tige (14) ou le tube (15) est fixé(e) pour l'empêcher de ressortir complètement, et de préférence le tube (15) présente à son extrémité du côté du support un rebord, une saillie ou un goujon.

9. Scie à ruban selon la revendication 7 ou 8, **caractérisée en ce que** le tube (15) est réalisé en forme de U et est monté de manière déplaçable sur deux tiges (14).

10. Scie à ruban selon l'une quelconque des revendications 1 à 6, **caractérisée en ce que** l'élément de base (6) peut pivoter de la position de transport dans la position de fixation et inversement,
l'axe de pivotement (16) de l'élément de base (6) s'étendant de préférence essentiellement parallèlement à la surface de base (1),
l'élément de base (6) étant, encore préférablement, réalisé en forme de U.

11. Scie à ruban selon la revendication 10, **caractérisée en ce que** l'axe de pivotement (16) de l'élément de base (6) s'étend essentiellement à angle droit par rapport à la surface de base (1),
l'élément de base (6) s'étendant de préférence dans la position de fixation avec une partie dans le support (2) de telle sorte que le support (2) disposé sur cette partie forme un appui pour l'élément de base (6).

12. Scie à ruban selon la revendication 10 ou 11, **caractérisée en ce que** la fixation de l'élément de base (6) dans la position de fixation est réalisée sous forme de gaine (17) sur l'articulation pivotante ou sous forme d'encliquetage, et/ou **en ce que** l'élément de base (6) peut être ressorti de manière télescopique et **en ce que** les pièces télescopiques individuelles peuvent à chaque fois être fixées dans leur position ressortie.
